Europäisches Patentamt

European Patent Office

Office européen des brevets

(19)

(11) Veröffentlichungsnummer : **0 437 812 B1**

(12) **EUROPÄISCHE PATENTSCHRIFT**

(45) Veröffentlichungstag der Patentschrift :
30.06.93 Patentblatt 93/26

(51) Int. Cl.$^5$ : **C01B 25/445**

(21) Anmeldenummer : 90125186.8

(22) Anmeldetag : 21.12.90

(54) **Vorrichtung zur Herstellung von Alkalimonofluorphosphaten.**

(30) Priorität : **19.01.90 DE 4001430**

(43) Veröffentlichungstag der Anmeldung :
**24.07.91 Patentblatt 91/30**

(45) Bekanntmachung des Hinweises auf die
Patenterteilung :
**30.06.93 Patentblatt 93/26**

(84) Benannte Vertragsstaaten :
**AT BE CH DE DK ES FR GB GR IT LI LU NL SE**

(56) Entgegenhaltungen :
**EP-A- 0 362 746
GB-A- 1 284 089
GB-A- 1 547 993**

(73) Patentinhaber : **BK LADENBURG GmbH,
Gesellschaft für chemische Erzeugnisse
Dr.-Albert-Reimann-Strasse 2
W-6802 Ladenburg (DE)**

(72) Erfinder : **Etzel, Armin
Insterburger Strasse 12
W-6944 Hemsbach (DE)**
Erfinder : **Tänzler, Richard, Dr.
Herdichgartenstrasse 30
W-6947 Laudenbach (DE)**
Erfinder : **Maurer, Alexander, Dr.
Kochelweg 1
W-6800 Mannheim 81 (DE)**
Erfinder : **Schönmann, Gerhard
Hilgundstrasse 33
W-6700 Ludwigshafen (DE)**
Erfinder : **Steinert, Hans-Georg
Jahnstrasse 9
W-6925 Eschelbronn (DE)**

(74) Vertreter : **Grussdorf, Jürgen, Dr. et al
Patentanwälte Zellentin & Partner
Rubensstrasse 30
W-6700 Ludwigshafen (DE)**

EP 0 437 812 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Gegenstand der vorliegenden Erfindung ist eine verbesserte Vorrichtung zur Herstellung von Natriummonofluorophosphaten, welche einen Reaktionstiegel aus einer Platinrhodiumlegierung enthält.

Alkalimonofluorophosphate werden durch Schmelzen eines Gemisches aus einem wasserfreien Alkalifluorid und einem Alkalimeta oder Pyro- oder Polyphosphat bei Temperaturen von etwa 800 - 1000 ° C in Schmelzgefäßen aus Platin, Silber, Eisen oder Graphit hergestellt (DE-C-1 792 648). Wegen der hohen Temperaturbeständigkeit, Härte und chemischen Widerstandsfähigkeit werden vorzugsweise Tiegel aus einer Platin-Rhodiumlegierung für diesen Zweck verwendet.

Trotz der hohen Widerstandsfähigkeit der verwendeten Tiegelmaterialien werden jedoch nach einer gewissen Betriebszeit Löcher und Risse in der Tiegelwand festgestellt, die es notwendig machen, die Tiegel auszutauschen. Die Verwendung preiswerteren Tiegelmaterials, beispielsweise Eisen oder Graphit, hat sich nicht bewährt, da diese einen verstärkten Abrieb aufweisen, welche das Endprodukt verunreinigt.

Es stellte sich daher die Aufgabe, eine Vorrichtung zu entwickeln, in der die verwendeten Edelmetalltiegel eine erhöhte Standzeit und damit größere Wirtschaftlichkeit aufweisen.

Die Lösung dieser Aufgabe liegt darin, daß eine an sich bekannte Schmelzapparatur, bestehend aus einem Tiegel aus einer Platin-Rhodium-Legierung, aus dem durch einen Ablauf im Boden des Tiegels das fertige Produkt in ein Kühlaggregat abläuft und kontinuierlich Rohmaterial von oben nachgefüllt wird, zwischen dem Produktauffang und dem Tiegel eine Gleichspannung angelegt wird, wobei der Tiegel als Anode und das Kühlaggregat als Kathode geschaltet ist. Die Spannung beträgt ungefähr 1 - 5 Volt, vorzugsweise 2 - 4 Volt.

Während normalerweise solche Tiegel bei einer Betriebsdauer von 10 - 20 Tagen Korrosionsrisse aufweisen, wurde eine erfindungsgemäße Apparatur 85 Tage betrieben, ohne daß dabei Korrosionsschäden auftraten.

Die Korrosionsschäden gemäß dem Stand der Technik treten dadurch auf, daß sich aus der Phosphatschmelze elementarer Phosphor abscheidet, welcher mit der Platin-Rhodium-Legierung eine neue Verbindung der ungefähren Zusammensetzung 24 Teile Platin, 63 Teile Rhodium und 13 Teile Phosphor bildet, welche einen Schmelzpunkt von etwa 600 - 800°C aufweist, so daß Tiegelbereiche dieser Zusammensetzung unter den Reaktionsbedingungen flüssig werden und unter Lochbildung aus der Tiegelwand herausgeschmolzen werden.

Aus der Herstellung von Phosphatgläsern ist es bekannt, daß innerhalb des Glasschmelzofens elektrische Ströme auftreten können, welche zu einer Reduktion der Phosphate führen und damit eine Korrosion der Platinauskleidung des Schmelzofens bewirken können.

Es ist deshalb üblich, alle leitenden Teile der Vorrichtung zu erden, um dadurch ein einheitliches elektrisches Potential in allen Teilen der Vorrichtung zu sichern.

Bei der Herstellung von Alkalimonofluorophosphaten führt, wie die Vorrichtung des Standes der Technik, bei der Tiegel und Kühlaggregat geerdet sind, zeigt, dieses Verfahren nicht zum gewünschten Ergebnis, da auch hier die Tiegel noch korrodieren. Überraschenderweise kann jedoch durch die einfache Maßnahme, die Vorrichtungsteile nicht mehr zu erden und damit auf ein gleiches Potential zu bringen, sondern durch Anlegen einer geringen Gleichspannung das Kühlaggregat gegenüber der Tiegelwandung negativ aufzuladen, eine Vorrichtung geschaffen werden, in der die Tiegel praktisch keine Korrosion mehr aufweisen.

Die erfindungsgemäße Vorrichtung ist im folgenden mit einer entsprechenden üblichen Vorrichtung verglichen worden.

## Versuchsbeschreibung

### Ofenaufbau

Der Schmelzofen besteht aus einem zylindrischen Platin-Rhodium-Tiegel mit einer Höhe von 0,8 m und einem Durchmesser von 8 cm, welcher im planen Boden eine Ausflußöffnung besitzt. Der Tiegel ist in einen elektrisch beheizten Ofen eingesetzt. Der Ofen besitzt am Boden eine Ablauföffnung, welche mit der Ausflußöffnung des Tiegels übereinstimmt und unter der sich ein Kühlaggregat befindet.

Tiegel und Kühlaggregat sind über eine "Fahne" geerdet bzw. mit einer Stromquelle verbunden.

### Schmelzdurchführung

Der vorstehende Ofen wird auf eine Temperatur von 800 °C - 1200 °C geheizt und bei dieser Temperatur der Tiegel kontinuierlich mit einem körnigen Gemisch aus 67,2 kg Natriumfluorid und 160 kg Natriummetaphosphat über eine Schüttelrinne beschickt und entsprechend ca. 227 kg Natriummonofluorophosphat-Schmelze am Boden abgezogen.

In der folgenden Tabelle sind die Standzeiten, d.h. die Zeit bis zum Auftreten von Löchern oder Rissen in der Tiegelwand, aufgeführt.

## Tabelle

| Tiegel-Nr. | Standzeit (Tage) | |
|---|---|---|
| 1 | 8 | |
| 2 | 17 | |
| 3 | 13 | Vergleich |
| 4 | 29 | geerdet |
| 5 | 6 | |
| 6 | 22 | |
| 7 | 85 | |
| 8 | >38 | Erfindungsgemäß mit 2-4 V Spannung |

Tiegel Nr. 1 - 6, welche als Vergleich nach dem Stand der Technik ebenso wie das Kühlaggregat geerdet waren, weisen am Ende der jeweiligen Versuchszeit deutliche Löcher und Risse durch Korrosion im oberen Bereich auf, d.h. das Wandmaterial ist an diesen Stellen ausgeschmolzen und die Ränder bestehen aus einem Pt/Rh/P-Gemisch der ungefähren Zusammensetzung 24 : 63 : 13. Tiegel, welche erfindungsgemäß als Anode gegenüber der Kühlwanne bei einer Spannungsdifferenz von 2 - 4 Volt geschaltet wurden, zeigten keine Schmelzkorrosion. Die Innenwände des Tiegels sowie die Ränder von ggfl. durch Materialermüdung entstehenden Rißstellen weisen keinen signifikanten Gehalt an Phosphorlegierung auf.

Der Vergleich beider Vorrichtungen zeigt die deutlichen Vorteile der Erfindung.

**Patentansprüche**

1. Vorrichtung zur Herstellung von Alkalimonofluorphosphaten bestehend aus einem Schmelztiegel aus Platinrhodiumlegierung und einem diesen umgebenden Heizmantel und Zuführungsvorrichtungen für die Rohstoffe Alkalifluorid und Alkalimetaphosphat oder Alkalipolyphosphat in den oberen Teil des Tiegels, einer Ausflußöffnung für geschmolzenes Alkalifluorphosphat im Boden des Tiegels sowie einem Kühlaggregat, **dadurch gekennzeichnet,** daß sich zwischen Kühlaggregat und Schmelztiegel eine Gleichspannungsquelle befindet, wobei der Schmelztiegel mit der Anode verbunden ist.

2. Vorichtung gemäß Anspruch 1, **dadurch gekennzeichnet,** daß die Gleichspannungsquelle eine Spannung von 1 - 5 Volt,vorzugsweise 2 - 4 Volt,besitzt.

3. Vorrichtung gemäß einem der Ansprüche 1 - 2, **dadurch gekennzeichnet,** daß der Tiegel zylindrisch ist, eine Höhe von 80 cm und einen Durchmesser von 8,0 cm hat.

4. Vorichtung gemäß einem der Ansprüche 1 - 3, **dadurch gekennzeichnet,** daß der Tiegel eine Temperatur von 800 - 1200° C aufweist.

EP 0 437 812 B1

## Claims

1. Device for the production of alkali metal monofluorophosphates consisting of a melting crucible of platinum-rhodium alloy and a heating mantle surrounding this and feeding devices for the raw materials alkali metal fluoride and alkali metal phosphate or alkali metal polyphosphate in the upper part of the crucible, an outlet opening for the molten alkali metal fluorophosphate in the bottom of the crucible, as well as a cooling aggregate, characterised in that between the cooling aggregate and the melting crucible there is present a source of direct current, whereby the melting crucible is connected with the anode.

2. Device according to claim 1, characterised in that the source of direct current has a voltage of 1 - 5 volts, preferably of 2 - 4 volts.

3. Device according to one of claims 1 - 2, characterised in that the crucible is cylindrical, has a height of 80 cm and a diameter of 8.0 cm.

4. Device according to one of claims 1 - 3, characterised in that the crucible has a temperature of 800 - 1200°C.

## Revendications

1. Dispositif de préparation de monofluophosphates alcalins comprenant un creuset en alliage de platine-rhodium, une chemise chauffante entourant ce dernier, des dispositifs d'alimentation pour les matières premières, du fluorure de métal alcalin et du métaphosphate de métal alcalin ou du polyphosphate de métal alcalin, dans la partie supérieure du creuset, et une ouverture d'écoulement pour du fluophosphate de métal alcalin fondu au fond du creuset ainsi qu'un appareil de refroidissement, caractérisé en ce qu'une source de tension continue se trouve entre l'appareil de refroidissement et le creuset, le creuset étant relié à l'anode.

2. Dispositif suivant la revendication 1, caractérisé en ce que la source de tension continue présente une tension de 1-5 volts, de préférence de 2-4 volts.

3. Dispositif suivant l'une des revendications 1 et 2, caractérisé en ce que le creuset est cylindrique, et a une hauteur de 80 cm et un diamètre de 8,0 cm.

4. Dispositif suivant l'une des revendications 1-3, caractérisé en ce que le creuset présente une température de 800 à 1200°C.

4